# EUROPÄISCHE PATENTANMELDUNG

(11) **EP 3 373 417 A1**
(43) Veröffentlichungstag der Anmeldung: **12.09.2018**
(21) Anmeldenummer: 17159389.0
(22) Anmeldetag: 06.03.2017
(51) Int. Cl.: H02K 1/02, C23C 24/04, H02K 1/04, H02K 1/06, H02K 15/02, H02K 15/10, H01F 41/16

(54) **FLUSSFÜHRUNGSELEMENT MIT SCHICHTAUFBAU**

(71) Anmelder: Siemens Aktiengesellschaft, 80333 München (DE)
(72) Erfinder: Brandl, Konrad, 93107 Thalmassing (DE)

(57) **Zusammenfassung**

Es wird ein Basiskörper (1) eines Flussführungselements einer elektromagnetischen Komponente hergestellt. Auf den Basiskörper (1) werden lokal erste Schichten (8) aufgebracht, die aus einem weichmagnetischen Pulvermaterial (9) bestehen.

## Beschreibung

Die vorliegende Erfindung geht aus von einem Herstellungsverfahren für ein Flussführungselement einer elektromagnetischen Komponente.

Die vorliegende Erfindung geht weiterhin aus von einem Flussführungselement einer elektromagnetischen Komponente.

Flussführungselemente für elektromagnetische Komponenten sind in verschiedenen Ausgestaltungen allgemein bekannt. Beispielsweise kann es sich um einen Bestandteil einer Drossel, eines elektromagnetischen Schaltelements oder eines Elektromagneten handeln. Auch kann das Flussführungselement als Rotor oder Stator einer rotatorischen elektrischen Maschine oder als Primärteil oder Sekundärteil einer linearen elektrischen Maschine ausgebildet sein.

Im Stand der Technik werden die Flussführungselemente in der Regel aus Elektroblechen hergestellt. Beispielsweise werden zur Herstellung des Stators einer rotatorischen elektrischen Maschine in Elektrobleche durch Stanzen oder mittels eines Lasers Ausnehmungen eingebracht. Sodann werden die Elektrobleche aufeinandergestapelt und mechanisch miteinander verbunden, so dass sie einen Block bilden.

Die Elektrobleche bestehen aus einem weichmagnetischen Werkstoff. Weichmagnetische Werkstoffe sind gemäß einem Auszug aus der deutschen Wikipedia, abgerufen und ausgedruckt am 27.12.2016, ferromagnetische Materialien, die sich in einem Magnetfeld leicht magnetisieren lassen. Auch eine Ummantelung ist einfach möglich. Im Gegensatz zu hartmagnetischen Werkstoffen ist bei weichmagnetischen Werkstoffen der Hystereseverlust jedoch gering. Weichmagnetische Werkstoffe werden insbesondere eingesetzt, wenn die Stärke des magnetischen Feldes, denen der weichmagnetische Werkstoff ausgesetzt werden soll, mit oder ohne Wechsel des Vorzeichens variiert.

Ein aus Elektroblechen hergestelltes Flussführungselement weist eine hohe Permeabilität auf. Aufgrund des Aufbaus des Flussführungselements aus Elektroblechen gibt es jedoch Einschränkungen bezüglich der realisierbaren Geometrien sowie der Be- und Verarbeitung. Insbesondere sind jedoch komplexe dreidimensionale Strukturen nur in begrenztem Umfang realisierbar und fertigungstechnisch sehr aufwendig. Auch müssen Nachteile bezüglich der Führung des magnetischen Flusses hingenommen werden. Auch müssen elektromagnetische Verluste oftmals hingenommen werden.

Die Aufgabe der vorliegenden Erfindung besteht darin, Möglichkeiten zu schaffen, mittels derer diese Nachteile behoben werden.

Die Aufgabe wird durch ein Herstellungsverfahren mit den Merkmalen des Anspruchs 1 gelöst. Vorteilhafte Ausgestaltungen des Herstellungsverfahrens sind Gegenstand der abhängigen Ansprüche 2 bis 5.

Erfindungsgemäß wird zur Herstellung des Flussführungselements zunächst ein Basiskörper des Flussführungselements hergestellt. Sodann werden auf den Basiskörper lokal erste Schichten aufgebracht werden, die aus einem weichmagnetischen Pulvermaterial bestehen.

Zum Herstellen des Basiskörpers werden vorzugsweise zunächst in Elektrobleche Ausnehmungen eingebracht, werden die Elektrobleche sodann aufeinander gestapelt und werden sodann die Elektrobleche mechanisch miteinander verbunden, so dass sie einen Block bilden, d.h. den Basiskörper. Die Herstellung des Basiskörpers erfolgt also vorzugsweise so, wie im Stand der Technik das ganze Flussführungselement hergestellt wird.

Zum Aufbringen der Schichten des weichmagnetischen Pulvermaterials sind verschiedene Vorgehensweisen möglich. Beispielsweise ist es möglich und derzeit bevorzugt, dass das weichmagnetische Pulvermaterial mit Hilfe eines Trägergases auf den Basiskörper bzw. eine zuvor aufgebrachte erste Schicht aufgespritzt wird. Geeignete Verfahren sind Fachleuten bekannt. Ein geeignetes Verfahren zum Aufspritzen eines derartigen Pulvermaterials ist beispielsweise das sogenannte MPA-Verfahren (= Metallpulverauftragsverfahren).

In manchen Fällen ist es von Vorteil, wenn das zusätzlich zu den ersten Schichten lokal zweite Schichten aufgebracht werden, die aus einem nicht magnetischen Pulvermaterial bestehen. Dadurch kann insbesondere eine gezielte Führung des magnetischen Flusses erfolgen. Beispielsweise können bei einem Reluktanzläufer einer rotatorischen elektrischen Maschine Stege aus dem nicht magnetischen Pulvermaterial und Flussleitstücke aus dem weichmagnetischen Material hergestellt werden.

In einer besonders bevorzugten Ausgestaltung sind die Körner des weichmagnetischen Pulvermaterials mit einem elektrisch isolierenden Material beschichtet, beispielsweise einem Harz. Dadurch können insbesondere elektrische Wirbelströme minimiert werden, oftmals sogar vollständig unterdrückt werden.

Die Aufgabe wird weiterhin durch ein Flussführungselement mit den Merkmalen von Anspruch 6 gelöst. Vorteilhafte Ausgestaltungen des Flussführungselements sind Gegenstand der abhängigen Ansprüche 7 bis 10.

Erfindungsgemäß wird ein Flussführungselement der eingangs genannten Art dadurch ausgestaltet, dass das Flussführungselement einen Basiskörper aufweist, auf den lokal erste Schichten aufgebracht sind, die aus einem weichmagnetischen Pulvermaterial bestehen.

Die vorteilhaften Ausgestaltungen des Flussführungselements korrespondieren im Wesentlichen mit denen des Herstellungsverfahrens.

Das Flussführungselement kann insbesondere als Bestandteil einer Drossel, eines elektromagnetischen Schaltelements, eines Elektromagneten oder als Rotor oder Stator einer rotatorischen elektrischen Maschine oder als Primärteil oder Sekundärteil einer linearen elektrischen Maschine ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: die Herstellung eines Basiskörpers eines Flussführungselements einer elektromagnetischen Komponente,
- FIG 2: das Aufbringen von Schichten auf den Basiskörper von FIG 1,
- FIG 3: ein Detail von FIG 2 und
- FIG 4: Körner eines weichmagnetischen Pulvers.

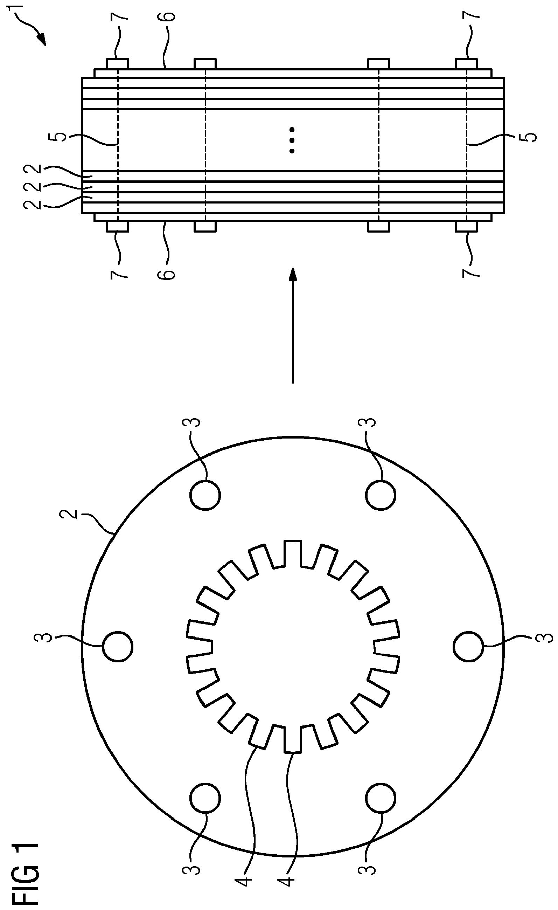

Zum Herstellen eines Flussführungselements einer elektromagnetischen Komponente wird gemäß FIG 1 zunächst ein Basiskörper 1 hergestellt. Der Basiskörper 1 kann entsprechend der Darstellung in FIG 1 insbesondere dadurch hergestellt werden, dass in Elektrobleche 2 Ausnehmungen 3, 4 eingebracht werden. Die Ausnehmungen 3, 4 können beispielsweise durch Ausstanzen eingebracht werden. Sodann werden die Elektrobleche 2 aufeinandergestapelt und mechanisch miteinander verbunden, so dass sie einen Block bilden, d.h. den Basiskörper 1. Je nach Anwendung können die Elektrobleche 2 beispielsweise miteinander verklebt werden. Eine derartige Vorgehensweise kann beispielsweise in Fällen sinnvoll sein, bei denen das Flussführungselement als Bestandteil einer Drossel, eines elektromagnetischen Schaltelements oder eines Elektromagneten ausgebildet ist. In anderen Fällen werden schematisch angedeutete Stäbe 5 durch hierfür vorgesehene Ausnehmungen 3 geführt und auf die Stäbe 5 sodann Abschlussplatten 6 aufgesetzt und über Schraubelemente 7 an die Elektrobleche 2 angepresst. Eine derartige Vorgehensweise kann beispielsweise in Fällen sinnvoll sein, in denen das Flussführungselement als Rotor oder Stator einer rotatorischen elektrischen Maschine oder als Primärteil oder Sekundärteil einer linearen elektrischen Maschine ausgebildet ist.

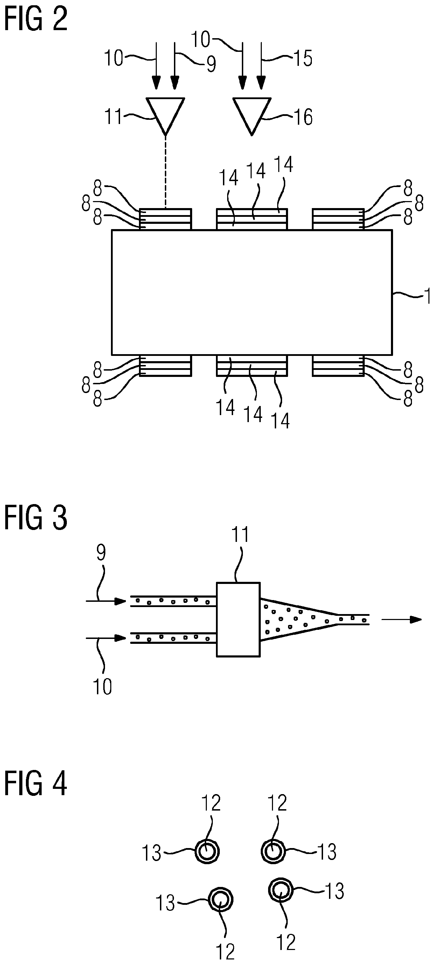

Sodann werden gemäß FIG 2 auf den Basiskörper 1 lokal erste Schichten 8 aufgebracht. Die ersten Schichten 8 bestehen aus einem weichmagnetischen Pulvermaterial 9. Zum Aufbringen der ersten Schichten 8 kann beispielsweise entsprechend der Darstellung in den FIG 2 und 3 das weichmagnetische Pulvermaterial 9 mit Hilfe eines Trägergases 10 über eine Düse 11 auf den Basiskörper 1 bzw. eine zuvor aufgebrachte Schicht 8 des weichmagnetischen Pulvermaterials 9 aufgespritzt werden. In einer besonders bevorzugten Ausgestaltung sind die Körner 12 des weichmagnetischen Pulvermaterials 9 entsprechend der Darstellung in FIG 4 mit einem elektrisch isolierenden Material 13 beschichtet. Bei dem elektrisch isolierenden Material 13 kann es sich beispielsweise um ein Harz handeln.

In manchen Fällen kann es sinnvoll sein, zusätzlich zu den ersten Schichten 8 lokal zweite Schichten 14 auf den Basiskörper 1 aufzubringen. Die zweiten Schichten 14 bestehen aus einem nicht magnetischen Pulvermaterial 15. Das Aufbringen der zweiten Schichten 14 auf den Basiskörper 1 kann beispielsweise entsprechend der Darstellung in FIG 2 analog zum Aufbringen der ersten Schichten 8 mit Hilfe des Trägergases 10 über eine weitere Düse 16 das entsprechende Pulvermaterial 15 auf den Basiskörper 1 aufgespritzt werden. Bei Bedarf können die Körner des nicht magnetischen Pulvermaterials 15 ebenfalls mit einem elektrisch isolierenden Material beschichtet sein.

Zusammengefasst betrifft die vorliegende Erfindung somit folgenden Sachverhalt:
Es wird ein Basiskörper 1 eines Flussführungselements einer elektromagnetischen Komponente hergestellt. Auf den Basiskörper 1 werden lokal erste Schichten 8 aufgebracht, die aus einem weichmagnetischen Pulvermaterial 9 bestehen.

Die vorliegende Erfindung weist viele Vorteile auf. Insbesondere sind nahezu keine geometrischen Limitierungen mehr gegeben. Auch ist die magnetische Flussführung in allen drei Raumrichtungen möglich. Die Bauteilgröße ist kaum limitiert, da nicht das gesamte Flussführungselement aus den ersten Schichten 8 aufgebaut ist, sondern ein Hybridverfahren (Herstellung des Basisteils 1 zuzüglich Aufbringung der ersten Schichten 8) realisiert wird. Bei Bedarf lassen sich in den ersten Schichten 8 auch Aussparungen zur Aufnahme von Permanentmagneten, Spulen oder dergleichen realisieren. Eventuell können insbesondere Stäbe oder Permanentmagnete auch im Rahmen des erfindungsgemäßen Herstellungsverfahrens mit integriert werden. Durch die Verwendung nicht nur des weichmagnetischen Pulvermaterials 9, sondern zusätzlich auch des nicht magnetischen Pulvermaterials 15 kann eine gezielte Führung des magnetischen Flusses erfolgen. Aufgrund der Verwendung des weichmagnetischen Pulvermaterials 9 sind keine Wirbelströme zu erwarten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für ein Flussführungselement einer elektromagnetischen Komponente, wobei zunächst ein Basiskörper (1) des Flussführungselements hergestellt wird und sodann auf den Basiskörper (1) lokal erste Schichten (8) aufgebracht werden, die aus einem weichmagnetischen Pulvermaterial (9) bestehen.

2. Herstellungsverfahren nach Anspruch 1, **dadurch gekennzeichnet , dass** zum Herstellen des Basiskörpers (1) zunächst in Elektrobleche (2) Ausnehmungen (3, 4) eingebracht werden, die Elektrobleche (2) sodann aufeinander gestapelt werden und die Elektrobleche (2) sodann mechanisch miteinander verbunden werden, so dass sie den Basiskörper (1) bilden.

3. Herstellungsverfahren nach Anspruch 1 oder 2, **dadurch gekennzeichnet, dass** zum Aufbringen der ersten Schichten (8) das Pulvermaterial (9) mit Hilfe eines Trägergases (10) auf den Basiskörper (1) bzw. eine zuvor aufgebrachte erste Schicht (8) aufgespritzt wird.

4. Herstellungsverfahren nach Anspruch 1, 2 oder 3, **dadurch gekennzeichnet, dass** zusätzlich zu den ersten Schichten (8) lokal zweite Schichten (14) aufgebracht werden, die aus einem nicht magnetischen Pulvermaterial (15) bestehen.

5. Herstellungsverfahren nach einem der obigen Ansprüche, **dadurch gekennzeichnet, dass** die Körner (12) des weichmagnetischen Pulvermaterials (9) mit einem elektrisch isolierenden Material (13) beschichtet sind, beispielsweise einem Harz.

6. Flussführungselement einer elektromagnetischen Komponente, wobei das Flussführungselement einen Basiskörper (1) aufweist, auf den lokal erste Schichten (8) aufgebracht sind, die aus einem weichmagnetischen Pulvermaterial (9) bestehen.

7. Flussführungselement nach Anspruch 6, **dadurch gekennzeichnet, dass** der Basiskörper (1) aus aufeinandergestapelten und mechanisch miteinander verbundenen Elektroblechen (2) besteht, in die Ausnehmungen (3,4) eingebracht sind.

8. Flussführungselement nach Anspruch 6 oder 7, **dadurch gekennzeichnet, dass** auf den Basiskörper (1) zusätzlich zu den ersten Schichten (8) lokal zweite Schichten (14) aufgebracht sind, die aus einem nicht magnetischen Pulvermaterial (15) bestehen.

9. Flussführungselement nach Anspruch 6, 7 oder 8, **dadurch gekennzeichnet, dass** die Körner (12) des weichmagnetischen Pulvermaterials (9) mit einem elektrisch isolierenden Material (13) beschichtet sind, beispielsweise einem Harz.

10. Flussführungselement nach einem der obigen Ansprüche, **dadurch gekennzeichnet, dass** das Flussführungselement als Bestandteil einer Drossel, eines elektromagnetischen Schaltelements, eines Elektromagneten oder als Rotor oder Stator einer rotatorischen elektrischen Maschine oder als Primärteil oder Sekundärteil einer linearen elektrischen Maschine ausgebildet ist.
